# EUROPEAN PATENT APPLICATION

(11) **EP 3 017 899 A1**
(43) Date of publication of application: **11.05.2016**
(21) Application number: 15193352.0
(22) Date of filing: 06.11.2015
(51) Int. Cl.: B23D 47/02, B27B 5/065

(54) **PANEL SAW MACHINE**

(30) Priority: 07.11.2014 IT BO20140626
(71) Applicant: Giben Tech S.r.l., 40065 Pianoro (Bologna) (IT)
(72) Inventor: BENUZZI, Piergiorgio, 40141 BOLOGNA (IT)
(74) Representative: Puggioli, Tommaso

(57) **Abstract**

Described is a panel saw machine (1) comprising a plurality of movable units (5, 7) including a unit (5) for cutting the panels and a unit (7) for moving the panels; the panel saw machine (1) comprises a framework (2) supporting a table (3) for supporting the panels, the cutting unit (5) and the movement unit (7); the movable units (5, 7) and/or the framework (2) comprise a plurality of commercial-type extruded section bars each having at least one fixing hollow; the movable units (5, 7) and/or the framework (2) comprise a plurality assembly accessories for assembling the commercial-type extruded section bars for forming at least partly the framework (2) and/or the movable units (5, 7).

## Description

This invention relates to a panel saw machine and in particular a panel saw machine for wooden panels or the like.

Panel saw machines of known type are used to cut panels of various sizes and materials, usually placed on top of each other in stacks of predetermined height.

The above-mentioned panel saw machines essentially comprise a horizontal work table to support the stacks of panels to be cut, a panel movement unit or pusher, movable along a horizontal direction for moving the panels along the supporting table and a rotary blade cutting device or unit for cutting the panel or the stack of panels along a cutting direction transversal to the feed direction.

Depending on the height of the stack of panels to be cut, that is to say, depending substantially on the type of machine, the cutting unit may comprise a main cutting tool blade and a scoring tool.

In prior art solutions, the pusher comprises a pushing bar extending in the cutting direction supported and guided at its relative ends.

The prior art panel saw machines comprise, for example, for driving the pressing unit, an electric motor for driving a pair of pinions, positioned at the ends of the above-mentioned beam, each meshing on a respective rack extending along the feed direction; there is also generally a shaft connecting the ends of the beam, which acts as a torsion bar to keep the correct alignment of the ends of the beam during feeding of the pressing unit.

Generally speaking, panel saw machines of known type comprise static structures, such as, for example, a base or the supporting table of the panels, and dynamic structures, such as the blades carriage and the pressing unit.

These structures, both static and dynamic, have the frameworks generally made of metal beams or bent steel plates suitably welded together according to the design drawings which the manufacturers of panel saw machines generally have prepared by external suppliers as semi-finished items.

These semi-finished items generally have relatively high costs, requiring lengthy times for them to be made, and, above all, they do not allow a high flexibility of manufacture or modification since once, for example, the dimensions of the static structures and/or the strokes for the dynamic structures are decided, the semi-worked item can no longer be modified.

Consequently, the manufacturers of panel saw machines must necessarily have well stocked stores, according to the various needs of the customers. The semi-finished items also have a relatively low quality and it is often necessary to perform milling operations on them and/or drilling of the bases, guides for the pressing units, pressing unit carriages (which are all very long pieces which must machined in several steps with expensive numerically controlled machines) and painting. Costly welding templates are usually necessary for the static or dynamic structures.

In this context, the main purpose of this invention is to provide a panel saw machine that is free of the above-mentioned drawbacks.

One aim of this invention is to provide a panel saw machine which makes it possible to reduce or eliminate the use of semi-finished items, possibly made by external suppliers, and, consequently, their expensive finishing operations.

Another aim of the invention is to provide a panel saw machine more easily suited to modifications and adaptations according to the needs of the customers, that is to say, a panel saw machine which is more versatile in its design and manufacture.

The technical purpose indicated and the aims specified are substantially achieved by a panel saw machine according to claim 1.

Further features and advantages of the invention are more apparent in the approximate and hence non-limiting description of a preferred, non-exclusive embodiment of a panel saw machine, illustrated in the accompanying drawings in which:
- Figure 1 illustrates a panel saw machine according to this invention in a schematic perspective view with some parts cut away for greater clarity;
- Figure 2 illustrates the machine of Figure 1 in a schematic front view, with some parts cut away for better clarity;
- Figure 3 illustrates a detail of the machine of Figure 1 in a schematic side view, with some parts cut away for greater clarity;
- Figure 4 illustrates a second detail of the machine of Figure 1 in a schematic side view, with some parts cut away for greater clarity;
- Figure 5 illustrates a schematic plan view, with some parts cut away for better clarity, of the detail of Figure 4;
- Figure 6 illustrates a third detail of the machine of Figure 1 in a schematic plan view from above, with some parts cut away for greater clarity;
- Figure 7 illustrates the detail of Figure 6 in a schematic side view, with some parts cut away for greater clarity.

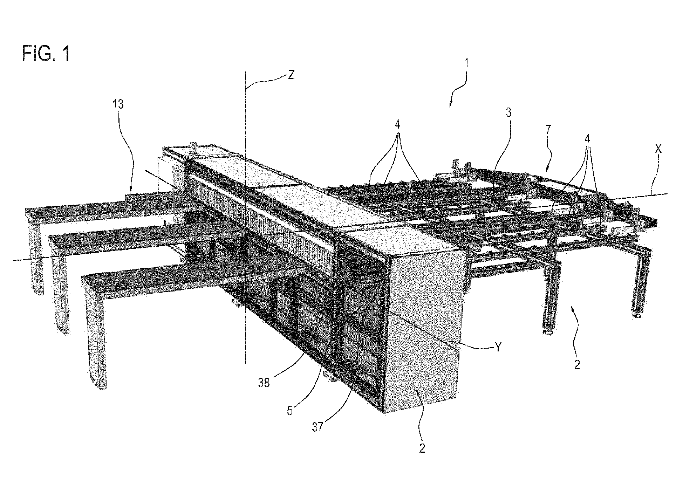

With reference to Figure 1, the numeral 1 denotes a panel saw machine according to this invention of the type used for cutting panels of various sizes, usually placed on top of each other in stacks of predetermined height.

The machine 1 comprises a plurality of movable processing units and a static framework 2, also supporting the movable units and the panels being processed.

The framework 2, which is described in more detail below, comprises a table 3 for supporting the panels defined in a substantially known manner by a plurality of components including also the wheels 4.

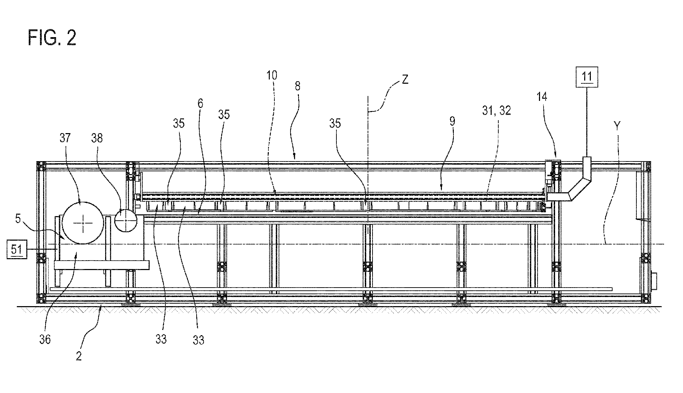

The movable units comprise a unit 5 for cutting the panels, shown in particular in Figures 2, 4 and 5, which is movable between a first operating position and a second operating position along a cutting line 6 extending along a cutting direction Y.

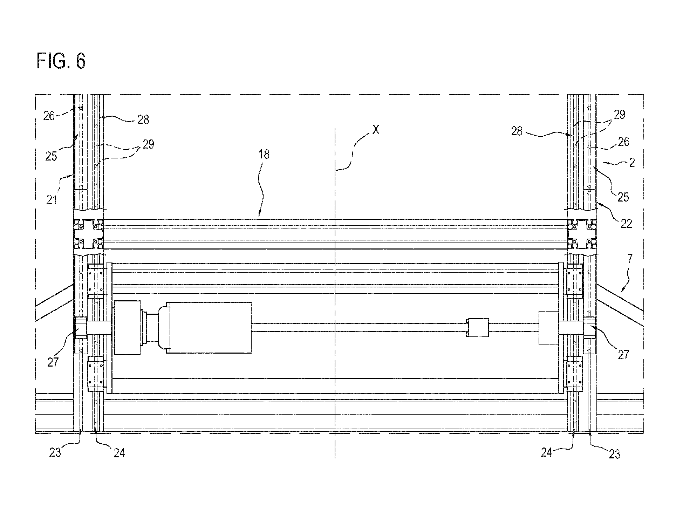

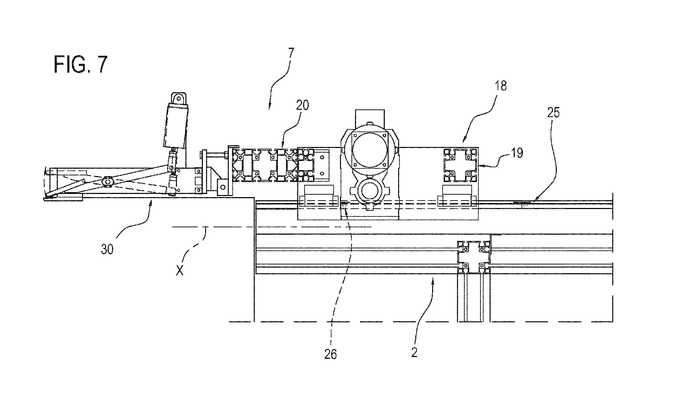

The movable units comprise a unit 7 for moving the panels 2, or pressing unit, shown in particular in Figures 6 and 7, which is movable along a feed direction X for feeding the panels to the cutting unit 5 and to the cutting line 6.

The above-mentioned framework 2 supports the supporting table 3 for the panels, the cutting unit 5 and the movement unit 7.

Advantageously, the framework 2 is made, at least partly, with a plurality of commercial-type extruded section bars suitably connected to each other and/or assembled by means of relative assembly accessories.

Advantageously, the movable units, for example the cutting unit 5 and/or the movement unit 7, are made, at least partly, with a plurality of commercial-type extruded section bars suitably connected to each other and/or assembled by means of relative assembly accessories.

In other words, the static structures, such as, for example, the framework 2, and dynamic structures, such as, for example, the cutting unit 5 and the movement unit 7, of the machine 1 are made using commercial-type extruded section bars.

The commercial-type extruded section bars, of substantially known type are not described in detail, are, in short, section bars made of aluminium or an aluminium alloy obtained by extrusion which the relative assembly accessories allow to be assembled in a simple and reliable fashion.

The profiles have a plurality of sockets or grooves into suitably shaped longitudinal which allow the fitting in themselves of the respective accessories fitting in particular for the connection with other profiled sections or for mounting further components technical.

The assembly accessories are also substantially of known type and are not described in detail and can be generally selected from commercial catalogues.

The assembly accessories comprise, for example, screws, bolts, brackets, corners, plates and the like.

With reference in particular to Figures 2, 3 and 4, it should be noted that the movable units comprise a pressing unit 8 to keep the panels being processed stationary on the supporting table 3 during the action of the cutting unit 5.

The pressing unit 8 which is movable relative to the supporting table 3 along a pressing axis Z which is orthogonal to the cutting axis Y and to the feed axis X between a raised position and a lowered position in which the panels are retained on the supporting table 3.

The machine 1 is preferably designed to cut stacks of panels having maximum cutting heights or thicknesses, measured according to the direction Z, of 50 or 60 millimetres.

The pressing unit 8 comprises a first commercial-type extruded 9 section bar which extends parallel to the cutting line 6.

The section bar 9 is preferably substantially of length equal to the stroke of the cutting unit 5, that is, it extends between the first operating position and second operating position of the cutting unit 5.

The first section bar 9 is preferably selected from amongst the commercial section bars comprising a generally central tubular hollow considering a transversal cross-section of the section bar 9.

The section bar 9 therefore has one tubular hollow 10 preferably coaxial with a main axis of the section bar 9.

The machine 1 comprises an extraction system, of substantially known type and not described and schematically represented as a block 11, for extracting dust and the particles which detach from the panels being processed when they are cut.

The extraction system 11 is in communication with the tubular hollow 10 for generating a suction through the hollow 10 at the cutting line 6.

In that sense, the section bar 9 has a plurality of holes or slots 12 facing the supporting table 3 for putting in fluid communication the hollow 10 with the cutting line 6.

Therefore, advantageously, the hollow 10 normally present in the commercial-type extruded section bars is used in the machine 1 as an extraction duct which would otherwise have to be provided on the pressing unit 8.

The machine 1 comprises a linear lateral contact element 13 for the panels of substantially known type. In use, the panels being processed are drawn near this contact element 13 for cutting precision.

The machine 1 comprises an aligning device 14 to place alongside and align the panels with the above-mentioned contact element 13.

The device 14 is at least partly movable according to the compression direction Z between a first operating position close to the supporting table 3 and a second operating position away from the supporting table 3.

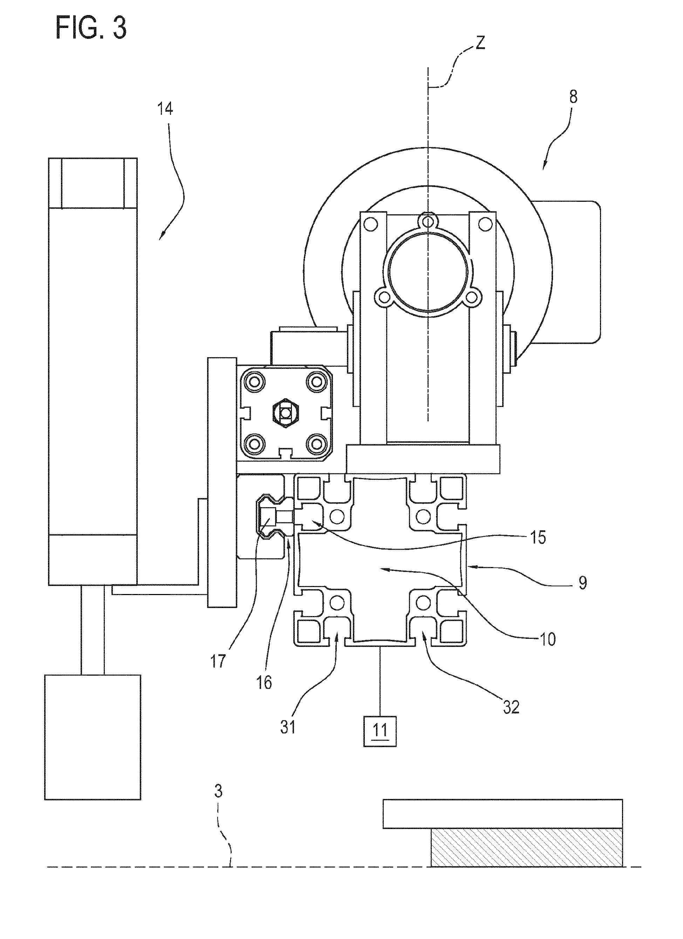

With reference in particular to Figure 3, it may be noted that the section bar 9 has a longitudinal hollow or groove 15 extending according to the direction Y.

The hollow 15 faces towards the movement unit 7, not visible in Figure 3, that is, from the side where the panels are fed to the cutting line 6.

The machine 1, in particular the pressing unit 8, comprises a straight guide 16, of substantially known type, supported by the section bar 9 and attached to the hollow 15 by corresponding assembly accessories 17, known and not described.

The aligning device 14 is engaged with the guide 16 and movable along it, that is, along the section bar 9, in a substantially known fashion, between a first operating position, away from the contact element 13, and a second operating position, close to the contact element 13.

Advantageously, therefore, the use of a commercial-type extruded section bar for making the pressing unit 8 also allows an easy assembly of the aligning device 14 using the constructional features of the section bar 9 in particular at least a longitudinal hollow of it.

In particular, with reference to Figures 6 and 7, looking in more detail at the movement unit 7, it may be noted that the latter comprises a main structure 18 comprising at least a first and a second extruded section bar 18, 19 of commercial type interconnected also using respective assembly accessories not illustrated.

In the solution illustrated by way of an example, the section bars 18 and 19 extend according to the cutting direction Y and each has a plurality of longitudinal hollows.

The framework 2 comprises two commercial-type extruded section bars 21, 22 which engage with, in a slidable fashion, the movement unit 7 which is movable along the section bars 21, 22 towards the cutting line 6 cuts and away from it.

The profiles 21 and 22 are substantially the same and extend according to the feed direction X of the panels.

Each section bar 21, 22 has a pair of longitudinal hollows or grooves 23, 24 wherein, with reference to Figure 6, 23 is the outermost one and 24 is the innermost one.

In the example embodiment illustrated, the machine 1 comprises a first and a second fixed rack 25, with corresponding assembly accessories 26, the first in the groove 23 of the section bar 21 and the second in the groove 23 of the section bar 22.

The movement unit 7 comprises a pair of pinions 27, motor-driven in a substantially known manner not described, each meshed with a corresponding rack 25 to move the movement unit 7 along the feed direction X.

The machine 1 comprises a first and a second fixed straight guide 28, with corresponding assembly accessories 29, the first in the groove 24 of the section bar 21 and the second in the groove 24 of the section bar 22.

The unit 7 is engaged on the guides 28 and slidable, in known manner, along them.

The unit 7 comprises a plurality of grippers 30, of which one is shown in Figure 7 and substantially of known type, for gripping the panels to be fed to the cutting line 6.

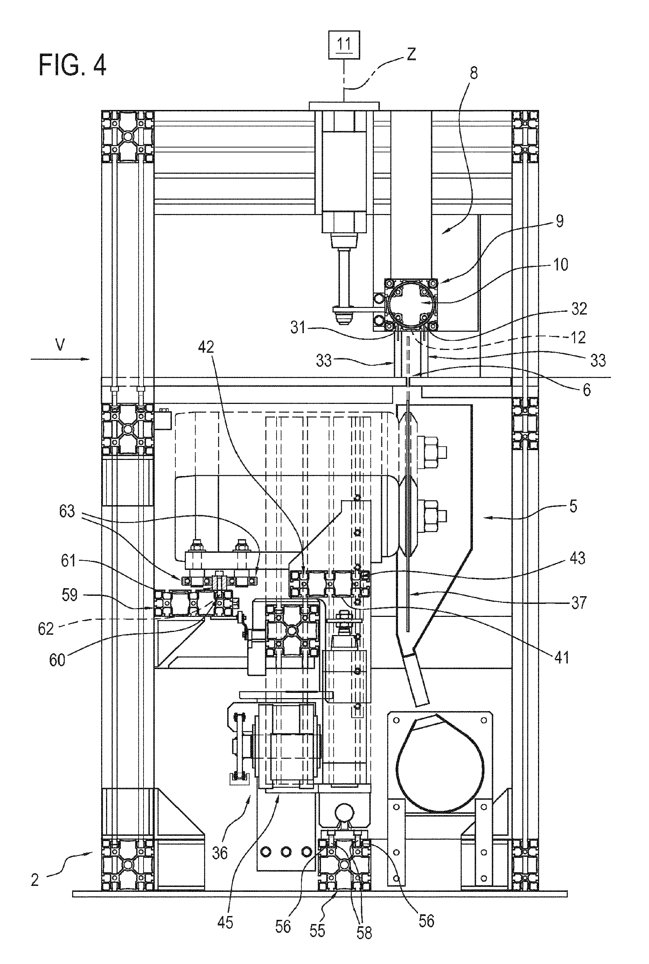

With reference in particular to Figures 2 and 4, it may be noted that the above-mentioned section bar 9 forming part of the pressing unit 8 has a first and a second longitudinal hollow 31, 32 facing the supporting table 3.

The pressing unit 8 comprises a plurality of projections 33, designed to engage the panels, extending towards the supporting table 3 and fastened to the section bar 9 in the hollows 31, 32 using corresponding assembly accessories 34.

Preferably, the projections 33 attached in the hollow 32 downstream of the cutting line 6 according to a direction V for feeding the panels to the cutting line 6 are adjacent to each other to form a continuous barrier. Alternatively, the projections 33 attached in the hollow 32 downstream of the cutting line 6 according to a direction V for feeding the panels to the cutting line 6 are replaced by a single projection extending for the entire length of the section bar 9.

The projections 33 attached in the hollow 31 upstream of the cutting line 6 in the direction V for feeding the panels to the cutting line 6 are suitably spaced from each other to define a plurality of openings 35 for the passage of the above-mentioned grippers 30 when the panels are placed along the cutting line 6.

Each gripper 30, in practice, inserts a corresponding opening 35 when the movement unit 7 is entirely positioned alongside the cutting line 6.

Advantageously, the assembly of the projections 33 to the section bar 9 using the assembly accessories 34 makes them adjustable in terms of their position along the section bar 9 and makes it possible to modify in an extremely easy manner and as required the position of the openings 35 and therefore also the distribution of the grippers 30 on the unit 7 for moving the panels.

Looking in more detail at the cutting unit 5, it may be noted that it comprises a carriage 36 movable along the cutting direction Y supporting a cutting blade 37 and a scoring tool 38.

The cutting unit 5 comprises a motor 39 for driving the blade 37 and a motor 40 for driving the scoring tool 38 installed on the carriage 36.

Preferably, the motor 39 is of the so-called spindle motion type and the blade 37 is mounted on its shaft.

Preferably, the motor 40 is of the so-called spindle motion type and the blade 38 is mounted on its shaft.

The carriage 36 comprises a commercial-type extruded section bar 41 extending according to the cutting direction Y on which the motor 39 is positioned.

The section bar 41 extends along a main and a second longitudinal hollow 42, 43 in which is coupled the motor 39 using corresponding assembly accessories 44.

Advantageously, the position of the motor 39 is easily adjustable along the section bar 41.

The carriage 36 comprises a base 45 substantially flat extending according to the cutting direction Y and a pair of extruded section bars 46, 47 extending according to the pressing direction Z and supported by the base 45.

The profiles 46, 47 are for example made of the same type as the section bar 41 which extends between the profiles 46 or 47 and by which it is supported.

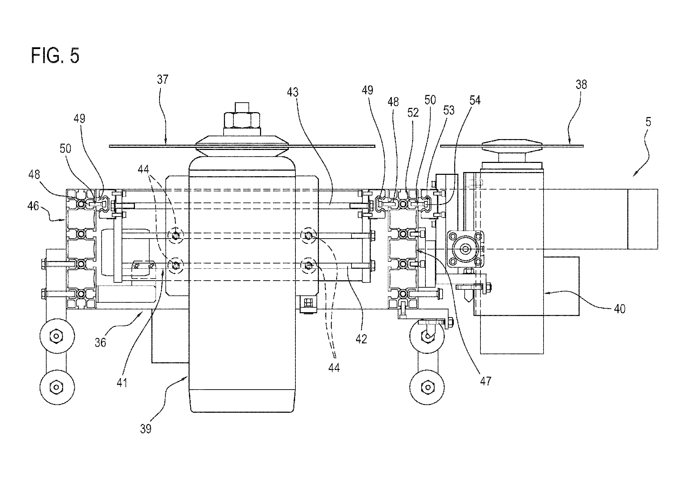

More specifically, as illustrated in Figure 5, the section bars 46, 47 each have a longitudinal hollow 48 facing each other.

A pair of straight guides 49 comprises a first guide fixed to the follow 48 of the section bar 46 and a second guide fixed to the hollow 48 of the section bar 47 using corresponding assembly accessories 50.

The section bar 41 is engaged in a slidable fashion, by suitable known runners not described, to the guides 49 and is movable along the runners between a lowered position and a raised position along the direction Z.

The cutting unit 5 comprises a system for lifting the section bar 41 along the guides 49 of known type and schematically represented as a block 51.

As illustrated in Figure 5, the motor 40 is supported by the section bar 47 on the opposite side relative to the section bar 41.

The section bar 47 has a longitudinal hollow 52 extending according to the axis Z and located on the opposite side relative to the hollow 48.

A rectilinear guide 53 is preferably fixed to the hollow 52 of the section bar 47 using corresponding assembly accessories 54.

The motor 40 is constrained in a slidable fashion to the guide 35 and is movable along the guide in known manner between a lowered position and a raised position.

With reference in particular to Figure 4, it may be noted that the framework 2 comprises a commercial-type extruded section bar 55, extending according to the cutting direction Z of the cutting unit 5.

The section bar 55 is preferably positioned underneath the cutting unit 5 and has a pair of longitudinal and parallel hollows 56 facing towards the cutting unit 5.

The machine 1 comprises a straight guide 57, preferably cylindrical, supported by the section bar 55 and connected to the hollows 56 by corresponding assembly accessories 58.

The cutting unit 5, and in particular the carriage 36, is slidably engaged with the guide 57 and powered for a movement along the guide in a substantially known manner not described.

The framework 2 comprises a commercial-type extruded section bar 59 extending according to the cutting direction Y, positioned substantially at the cutting line 6 and having a longitudinal hollow 60.

The machine 1 comprises a straight contact element 61 supported by the section bar 59 and fixed to the section bar in the hollow 60 by respective assembly accessories 62.

The cutting unit 5 comprises, for example, a pair of bearings 63 slidable in known manner along the contact element 61 and positioned on opposite sides of it in such a way that the unit 5 is engaged and guided by the contact element 61 during the movement along the cutting line 6.

The invention described brings important advantages.

The use of extruded aluminium section bars significantly reduces the use of welded semi-finished items in the making of the panel saw machine, thus enabling personalisation in a relatively quick and simple manner.

The extruded section bars of known type make it possible to reduce or eliminate the finishing operations such as painting or grinding the stretches where guides and the like must be applied.

The section bars enable the weight of the moving masses with regards to the movable units to be reduced, thus offering, for example, the possibility of installing on board the movable units themselves secondary accessories such as the lateral aligning device on the pressing unit.

With regard to the pressing unit, it should be noted that, given the relatively low weight of the section bar, a relative movement along the Z axis may be performed with a single linear actuator instead of the two actuators normally used in prior art solutions.

The actuator is preferably positioned towards an end of the section bar, in particular on the same side as the lateral aligning device, and a torsion bar controls the other end.

The use of the section bars and the relative assembly accessories reduces the assembly times of the machines as it is no longer necessary, as mentioned, to make in advance welded semi-finished items.

The section bars used for the framework also act as support for any guards and protective panels which may be attached to the section bars using the grooves present in them and corresponding assembly accessories.

Given the dimensional precision of the commercial section bars it is possible, in the case, for example, of the movement unit or the cutting unit, to fix the guides and the racks directly to the section bars without any preliminary mechanical finishing operation.

The commercial-type extruded section bars can be easily machined; they can be easily and economically cut and can be formed on the same holes, slots and the like according to the specific requirements, such as, for example, the possibility of using the tubular hollow of the pressing unit for extracting the dust.

The motors of the carriage are fixed using the grooves in the section bars which allow all the necessary adjustments of the position of the blades to be made at least with respect to the supporting table of the panels.

## Claims

1. A panel sawing machine comprising
a plurality of movable units (5, 7, 8) including
a cutting unit (5), movable, for cutting said panels, between a first operating position and a second operating position along a cutting line (6) extending along a cutting axis (Y), and
a movement unit (7) for moving said panels, which is movable along a feed axis (X) for feeding said panels to said cutting unit (5), said sawing machine comprising
a framework (2) supporting a supporting table (3) for the panels, the cutting unit (5) and the movement unit (7), said sawing machine being **characterised in that** said movable units (5, 7, 8) and/or said framework (2) comprise a plurality of commercial-type extruded section bars (9, 19, 20, 21, 22, 41, 46, 47, 55, 59) each comprising at least a fixing hollow (15, 23, 24, 31, 32, 42, 43, 48, 52, 56, 60), said movable units (5, 7, 8) and/or said framework (2) comprising a plurality of assembly accessories (17, 26, 29, 34, 44, 50, 54, 58, 62) for assembling said commercial-type extruded section bars (9, 19, 20, 21, 22, 41, 46, 47, 55, 59) in such a way as to at least partly form said framework (2) and/or said movable units (5, 7, 8).

2. The sawing machine according to claim 1 wherein said movable units (5, 7, 8) comprise a pressing unit (8) which is movable relative to said supporting table (3) along a pressing axis (Z) which is orthogonal to said cutting axis (Y) and to said feed axis (X) between a raised position and a lowered position in which said panels are retained on said supporting table (3), said pressing unit (8) comprising a first commercial-type extruded section bar (9) extending parallel to said cutting line (6) between said first operating position and said second operating position of said cutting unit (5).

3. The machine according to claim 2, wherein said first commercial-type extruded section bar (9) comprises at least a tubular hollow (10), said machine comprising an extraction system (11) in communication with said tubular hollow (10) for generating suction at said cutting line (6) through said tubular hollow (10).

4. The sawing machine according to claim 2 or 3, wherein said first commercial-type extruded section bar (9) comprises at least a first longitudinal hollow (31, 32) facing said supporting table (3), said pressing unit (8) comprising at least a first and a second projection (33) which are coupled to said first longitudinal hollow (31, 32) by means of corresponding first assembly accessories (34) and project towards said supporting table (3), said first and second projections (33) delimiting an opening (35) and in particular their position being adjustable along said first commercial-type extruded section bar (9), said movement unit (7) comprising at least a gripper (30) for gripping the panels insertable in said opening (35) along said feed axis (X).

5. The machine according to any one of claims 2 to 4, wherein said first commercial-type extruded section bar (9) comprises at least a second longitudinal hollow (15) preferably facing towards said movement unit (7) and extending along said cutting axis (Y), said machine comprising an aligning device (14) for the panels which is supported by said second longitudinal hollow (15) by means of corresponding second assembly accessories (17) and projects towards said supporting table (3), said aligning device (14) being movable along said pressing axis (Z) between a first operating position close to said worktable (3) and a second operating position distanced from said worktable (3) and along said cutting axis (Y) along said first commercial-type extruded section bar (9) between a first operating position and a second operating position.

6. The machine according to claim 5, comprising a first straight guide (16) extending along said cutting axis (Y) and supported by said pressing unit (8) at said second longitudinal hollow (15) by means of said second assembly accessories (17), said aligning device (14) being slidably constrained to said first straight guide (16).

7. The sawing machine according to any one of the preceding claims, wherein said cutting unit (5) comprises a carriage (36) movable along said cutting axis (Y), at least a cutting blade (37) and a motor (39) for driving said cutting blade (37) which are installed on said carriage (36), said carriage (36) comprising at least a second commercial-type extruded section bar (41) extending along said cutting axis (Y) and comprising at least a third longitudinal hollow (42, 43), said motor (39) being supported by said second commercial-type extruded section bar (41) in said third hollow (42, 43) by means of corresponding third assembly accessories (44).

8. The machine according to claim 7, wherein said carriage (36) comprises a third commercial-type extruded section bar (46, 47) extending along a pressing axis (Z) which is orthogonal to said cutting axis (Y) and to said feed axis (X) and comprising at least a fourth longitudinal hollow (48), said carriage (36) comprising a second straight guide (49) associated with said fourth hollow (48) of said third commercial-type extruded section bar (46, 47) by means of corresponding fourth assembly accessories (50), said second commercial-type extruded section bar (41) being associated slidably along said pressing axis (Z) with said second straight guide (49).

9. The machine according to any one of the preceding claims, wherein said framework (2) comprises at least a fourth commercial-type extruded section bar (21, 22) extending along said feed axis (X) and comprising at least a fifth longitudinal hollow (23), said machine comprising at least a rack (25) supported by said fourth commercial-type extruded section bar (21, 22), being fixed at said fifth hollow (23) by means of corresponding fifth assembly accessories (26), said movement unit (7) engaging with said rack (25) for movement along said feed axis (X).

10. The machine according to any one of the preceding claims, wherein said framework (2) comprises at least a fifth commercial-type extruded section bar (21, 22) extending along said feed axis (X) comprising at least a sixth longitudinal hollow (24), said machine comprising at least a third straight guide (28) supported by said fifth commercial-type extruded section bar (21, 22), being fixed at said sixth hollow (24) by means of corresponding sixth assembly accessories (29), said movement unit (7) engaging with said third straight guide (28) for movement along said feed axis (X).

11. The machine according to any one of the preceding claims, wherein said framework (2) comprises a sixth commercial-type extruded section bar (41) extending along said cutting axis (Y) and positioned below said cutting unit (5), said sixth extruded section bar (41) comprising at least a seventh longitudinal hollow (42, 43), said machine comprising a fourth straight guide (49) supported by said sixth commercial-type extruded section bar (41), being fixed at said seventh hollow (42, 43) by means of corresponding seventh assembly accessories (50), said cutting unit (5) engaging with said fourth straight guide (49) for movement along said cutting axis (Y).

12. The machine according to any one of the preceding claims, wherein said framework (2) comprises a seventh commercial-type extruded section bar (59) extending along said cutting axis (Y), comprising at least an eighth longitudinal hollow (60), said machine comprising a straight contact element (61) supported by said seventh commercial-type extruded section bar (59), being fixed at said eighth hollow (60) by means of corresponding eighth assembly accessories (62), said cutting unit (5) engaging with said straight contact element (61) in the movement along said cutting axis (Y).

13. The machine according to any one of the preceding claims, wherein said framework (2) comprises at least an eighth commercial-type extruded section bar (21, 22) comprising at least a ninth longitudinal hollow (23), said machine comprising at least a rack (25) supported by said eighth commercial-type extruded section bar (21, 22), being fixed at said ninth hollow (23) by means of corresponding ninth assembly accessories (26), said movement unit (7) engaging with said rack (25) for movement along said feed axis (X), said eighth commercial-type extruded section bar (21, 22) comprising at least a tenth longitudinal hollow (24), said machine comprising at least a fifth straight guide (28) supported by said eighth commercial-type extruded section bar (21, 22), being fixed at said tenth hollow (24) by means of corresponding tenth assembly accessories (29), said movement unit (7) engaging with said third straight guide (28) for movement along said feed axis (X).
